# FASCICULE DE BREVET EUROPEEN

(11) **EP 3 164 903 B1**
(45) Date de publication et mention de la délivrance du brevet: **28.04.2021**
(21) Numéro de dépôt: 15745536.1
(22) Date de dépôt: 01.07.2015
(51) Int. Cl.: H01M 10/052, H01M 10/0565, H01M 10/0585

(54) **BATTERIE ENTIÈREMENT SOLIDE COMPRENANT UN ÉLECTROLYTE EN MATÉRIAU POLYMÈRE SOLIDE RÉTICULE**
FESTSOFFBATTERIE MIT EINEM AUS EINEM VERNETZTEN FESTPOLMERMATERIAL HERGESTELLTEN ELEKTROLYTEN
SOLID-STATE BATTERY INCLUDING AN ELECTROLYTE MADE OF A CROSS-LINKED SOLID POLYMER MATERIAL

(30) Priorité: 01.07.2014 FR 1456273
(43) Date de publication de la demande: 10.05.2017
(73) Titulaire: I-TEN, 69570 Dardilly (FR)
(72) Inventeur: GABEN, Fabien, F-69570 Dardilly (FR)
(74) Mandataire: Schmidt, Martin Peter
(86) Numéro de dépôt international: PCT/FR2015/051814
(87) Numéro de publication internationale: WO 2016/001584

(56) Documents cités:
- EP-A1- 2 432 065
- WO-A1-2013/064779
- FR-A1- 2 893 623
- FR-A1- 2 982 083
- US-A1- 2007 015 061

## Description

### Domaine technique

La présente invention se rapporte au domaine des batteries. Elle concerne plus particulièrement les batteries entièrement solides, et un nouveau procédé de fabrication de telles batteries.

### Etat de la technique

On connaît des batteries comprenant des électrolytes constitués, soit par un sel dissous dans un polymère sec, soit par un polymère gonflé ou gélifié par une solution d'un sel dans un mélange de solvants organiques polaires aprotiques. Typiquement, la réalisation de l'électrolyte consiste à mettre en solution un polymère, un sel et un mélange de solvants constitutifs de l'électrolyte polymère, puis, après avoir déposé le mélange sous forme de film, on élimine le solvant sous pression atmosphérique ou réduite sans éliminer les solvants constitutifs de l'électrolyte polymère. Le document FR 2 982 083 A1 divulgue des électrolytes réalisés à partir de polymères imprégnés d'un sel de lithium. Le document WO 98 / 35 397 A1 décrit une batterie comprenant un électrolyte formé à partir d'une solution d'électrolyte séchée comprenant un polyimide thermoplastique amorphe et soluble dans un solvant organique, et un sel de lithium. Cependant, l'utilisation de solvant organique ne permet pas de garantir la sécurité et la durée de vie de la batterie en la protégeant des risques de court-circuit et d'inflammation de solvant.

Dans le domaine des batteries à ions de lithium, des électrolytes polymériques peuvent être employés. Par exemple, le document FR 2 893 623 A1 divulgue la préparation d'une couche épaisse de polymère réticulé ayant des groupes ioniques, d'environ 100 µm d'épaisseur, utilisable comme électrolyte polymère dans une batterie à ions de lithium. Le document US 2007/015 061 divulgue une batterie en couches minces comprenant une couche d'électrolyte « dur » et une couche d'électrolyte « mou », tel qu'un électrolyte polymérique déposée sur la couche d'électrolyte « dur ».

On connait également des batteries « tout solide » comprenant des électrolytes solides réalisés à parti de matériau polymère à base d'oxyde de polyéthylène (PEO) ou d'oxyde de polypropylène (PPO). Cependant, ces types d'électrolytes possèdent une conductivité ionique à température ambiante relativement faible (de l'ordre de 10⁻⁷ S/cm). Le document US 5, 407,593 enseigne que le transport des ions dans un électrolyte polymère passe par la région amorphe d'une matrice polymère. Ainsi, la conductivité ionique d'un électrolyte en polymère peut être augmentée en diminuant la région cristalline et en augmentant la région amorphe du polymère. Aussi, il est possible en modifiant la température de transition vitreuse du polymère, en supprimant les zones cristallines et en utilisant des masses moléculaires plus faibles, d'augmenter la conduction ionique. Cependant, ces modifications sur le matériau polymère créées souvent une forte dégradation des propriétés mécaniques de l'électrolyte.

Par ailleurs, il a été démontré que la réticulation de polymère conducteur peut augmenter la solidité des films mais cela se traduit par une baisse de la conductivité. Par exemple, l'article de P.M. Blonsky et D.F. Shriver, J. Am. Chem. Soc. 1984, 106, pages 6854-6855 décrit un polymère de type poly(bis(méthoxy éthoxy)phosphazène) comprenant des courtes chaînes d'oxyde de polyéthylène dont la conductivité ionique à 25°C dépasse 10⁻⁵ S/cm. Cependant, la stabilité électrochimique de matériau polymère solide réticulé ainsi que ses propriétés mécaniques sont limitées.

La présente invention a pour but de réaliser une batterie tout solide selon la revendication 13, comprenant un électrolyte solide en matériau polymère réticulé, présentant une bonne résistance mécanique et présentant une conductivité ionique supérieure à celle des électrolytes solides en matériau polymère réticulé connu de l'état de la technique.

Un autre but de l'invention est de fabriquer des batteries en couches minces par un procédé selon la revendication 1, pouvant être mis en œuvre industriellement de manière assez simple.

### Objets de l'invention

Un premier objet de l'invention concerne un procédé de fabrication d'une batterie en couches minces entièrement solide comprenant les étapes successives suivantes :
a) on dépose une couche comprenant au moins un matériau d'anode (appelée ici « couche de matériau d'anode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode (appelée ici « couche de matériau de cathode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose sur au moins une couche obtenue à l'étape a) et/ou b) une couche comprenant au moins un matériau d'électrolyte solide dont l'épaisseur est inférieure à 10 µm, de préférence inférieure à 5 µm, et encore plus préférentiellement inférieure à 2 µm (appelée ici « couche de matériau d'électrolyte »), le matériau d'électrolyte solide comprenant un matériau polymère solide réticulé comportant des groupements ioniques ;
d) on empile face sur face successivement :
   - soit une couche de matériau d'anode revêtue d'une couche de matériau d'électrolyte solide obtenue à l'étape c) avec une couche de matériau de cathode revêtue ou non d'une couche de matériau d'électrolyte solide obtenue à l'étape c) ;
   - soit une couche de matériau de cathode revêtue d'une couche de matériau d'électrolyte solide obtenue à l'étape c) avec une couche de matériau d'anode revêtue ou non d'une couche de matériau d'électrolyte solide obtenue à l'étape c) ;
e) on effectue un traitement thermique et/ou une compression mécanique de l'empilement obtenu à l'étape d) pour obtenir une batterie en couches minces entièrement solide.

De préférence, le matériau polymère solide réticulé est choisi parmi les polyméthacrylates de méthyle, les polyamines, les polyimides, ou les polysiloxanes.

De préférence, les groupements ioniques du matériau polymère sont choisis parmi les cations suivants : l'imidazolium, le pyrazolium, le tétrazolium le pyridinium, le pyrrolidinium, tel que le n-propyl-n-methylpyrrolidinium (appelé aussi PYR₁₃) ou le n-butyl-n-methylpyrrolidinium (appelé aussi PYR₁₄), l'ammonium, le phosphonium ou le sulfonium ; et/ou parmi les anions suivants : le bis(trifluoromethane)sulfonimide, le bis(fluorosulfonyl)imide, ou le n-(nonafluorobutanesulfonyle)-n-(trifluoromethanesulfonyle)-imide.

Dans un mode de réalisation particulier du procédé selon l'invention, le matériau polymère solide réticulé est obtenu par une étape de polymérisation d'un mélange de monomères et/ou oligomères et/ou pré-polymères comprenant un ou plusieurs groupements polymérisables par voie thermique ou photochimique, ledit mélange de monomères et/ou oligomères et/ou pré-polymères comprenant un ou plusieurs groupements réactifs permettant le greffage desdits groupements ioniques, puis séchage du matériau polymère réticulé obtenu.

Avantageusement, la polymérisation par voie thermique et/ou photochimique est réalisée directement sur la ou les couche(s) d'anodes et/ou de cathodes.

Le matériau polymère réticulé comportant des groupements ioniques déposé à l'étape c) est réalisé parmi l'une au moins des techniques suivantes : par trempage-retrait (dip-coating), par trempage-tournette (spin-coating), enduction au rouleau (roll coating), racle (doctor blade), électropulvérisation, ou électrophorèse.

L'épaisseur de la couche d'électrolyte c) est inférieure à 10 µm, de préférence inférieure à 5 µm, et encore plus préférentiellement inférieure à 2 µm. Avantageusement, l'épaisseur de la couche de matériau polymère est comprise entre 0,5 et 1 µm.

Les couches d'anode, de cathode et d'électrolytes solides sont déposées parmi au moins l'une des techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) électropulvérisation ;
(iv) électrophorèse ;
(v) aérosol deposition ;
(vi) sol-gel ;
(vii)trempage, plus particulièrement par trempage-retrait (dip-coating), trempage-tournette (spin-coating), ou par le procédé Langmuir-Blodgett.

De préférence, les couches d'anode, de cathode et d'électrolyte sont déposées par électropulvérisation, électrophorèse, à partir d'un aérosol ou par trempage, et sont de préférence, toutes déposées par électrophorèse.

Avantageusement, les couches de matériau d'anode et/ou de cathode comprennent en outre des matériaux conducteurs électroniques, et en particulier de graphite, et/ou de matériaux conducteurs des ions lithium, du type de ceux utilisés pour réaliser les films d'électrolyte.

Dans un mode de réalisation particulier, les couches d'anode et/ou de cathode sont réalisées par un dépôt de nanoparticules respectivement de matériau d'anode, de cathode parmi l'une au moins des techniques suivantes : électropulvérisation, électrophorèse, aérosol déposition, trempage.

De préférence, les couches de matériau d'anode, de cathode et d'électrolyte sont toutes déposées par électrophorèse.

Avantageusement, le traitement thermique est réalisé à une température comprise entre 50°C et 300°C, de préférence entre 100°C et 200°C et/ou en ce que la compression mécanique des couches à assembler est réalisée à une pression comprise entre 10 et 100 MPa, de préférence entre 20 et 50 MPa.

La couche de matériau d'anode a) est réalisée à partir d'un matériau choisi parmi :
(i) les oxynitrures d'étain (de formule typique SnOₓN_{y}) ;
(ii) le phosphate de fer lithié (de formule typique LiFePO₄) ;
(iii) les oxynitrures mixtes de silicium et étain (de formule typique SiₐSn_{b}O_{y}N_{z}avec a>0, b>0, a+b≤2, 0<y≤4, 0<z≤3) (appelés aussi SiTON), et en particulier le SiSn_{0,87}O_{1,2}N_{1,72} ; ainsi que les oxynitrures-carbures de formule typique SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O_{2,9} et TiO₂.

La couche de matériau de cathode b) est réalisée à partir d'un matériau de cathode choisi parmi :
(i) les oxydes Li Mn₂O₄, LiCoO₂, LiNiO₂, LiMn_{1,5}Ni_{0,5}O₄, LiMn_{1,5}Ni_{0,5-x}XₓO₄ (où x est sélectionné parmi Al, Fe, Cr, Co, Rh, Nd, autres terres rares, et où 0 < x < 0,1), LiFeO₂, LiMn_{1/3}Ni_{1/3}Co_{1/3}O₄;
(ii) les phosphates LiFePO₄, LiMnPO₄, LiCoPO₄, LiNiPO₄, Li₃V₂(PO₄)₃ ; les phosphates de formule LiMM'PO₄, avec M et M' (M ≠ M') sélectionnés parmi Fe, Mn, Ni, Co, V ;
(iii) toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

Dans un mode de réalisation particulier, le procédé comprend en outre une étape f) d'encapsulation de la batterie obtenue à l'étape e) par dépôt d'au moins une couche d'encapsulation de matériau céramique, vitreux ou vitrocéramique.

Avantageusement, on réalise des terminaisons anodiques et cathodiques par métallisation des sections découpées, de préférence par dépôt d'une couche d'étain éventuellement déposé sur une première sous couche de nickel et/ou de résine époxy chargé en particules métalliques.

De préférence, les substrats conducteurs sont en aluminium, en cuivre, en acier inoxydable, en titane ou en nickel, de préférence en nickel, et éventuellement revêtus d'un métal noble choisi parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

Un autre objet de l'invention concerne une batterie susceptible d'être obtenue par le procédé selon l'invention.

Avantageusement, la capacité surfacique de la cathode est supérieure ou égale à la capacité surfacique de l'anode.

Dans un mode de réalisation préféré, l'empilement des couches de cathode et d'anode est décalé latéralement.

Avantageusement, la batterie comprend au moins une couche d'encapsulation, de préférence une couche en céramique, verre ou en vitrocéramique. Encore plus avantageusement, la batterie comprend une deuxième couche d'encapsulation déposée sur ladite première couche d'encapsulation, ladite deuxième couche d'encapsulation étant de préférence en silicone.

De préférence, ladite au moins une couche d'encapsulation revêt totalement quatre des six faces de ladite batterie et partiellement les deux faces restantes, situées sous les métallisations servant à la connectique de la batterie.

Dans un mode de réalisation particulier, la batterie comprend des terminaisons au niveau où les collecteurs de courant cathodique, respectivement anodique, sont apparents. Avantageusement, les connexions anodiques et les connexions cathodiques se trouvent sur les côtés opposés de l'empilement.

Selon un aspect particulier de l'invention, la batterie est entièrement inorganique.

### Description détaillée de l'invention

### 1. Définitions

Dans le cadre de la présente invention, on entend par « dépôt électrophorétique » ou « dépôt par électrophorèse » une couche déposée par un procédé de dépôt de particules préalablement mises en suspension dans un milieu liquide, sur un substrat de préférence conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt dit « dense » de particules se forme sur le substrat, si le potentiel zêta de la suspension des particules présente une valeur appropriée, et/ou suite à un traitement spécifique de densification de nature thermique et/ou mécanique. Ce dépôt présente une structure particulière et reconnaissable par l'homme du métier qui le distingue des dépôts obtenus par toute autre technique.

Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en D₅₀.

On entend par batterie « tout solide » (appelée aussi ici batterie « entièrement solide »), une batterie ne comprenant pas de matériau en phase liquide.

On entend par « capacité surfacique » d'une électrode la quantité d'ion lithium susceptible d'être insérée dans une électrode (exprimée en mA.h/cm²).

Dans le cadre de la présente invention on peut utiliser des composés de type grenat (« garnet » en anglais), notamment en tant qu'électrolyte, dans lesquels la conductivité ionique est assurée par des ions de lithium. La composition chimique des grenats est variable en fonction de la substitution isomorphe des différents atomes qui constituent sa formule de base Li_{d} A¹ₓ A²_{y}(TO₄)_{z}. Dans cette formule Li représente un cation de lithium. La valeur d est comprise entre 2 et 10, préférentiellement entre 3 et 9, et encore plus préférentiellement entre 4 et 8. A¹ représente un cation de degré d'oxydation +II, en site pseudo-cubique de coordinence 8. La valeur x est typiquement de 3, mais il peut y avoir un écart stœchiométrique. A¹ peut par exemple être Ca, Mg, Sr, Ba, Fe, Mn, Zn, Y, Gd. A² représente un cation de degré d'oxydation +III, en site octaédrique de coordinence 6. La valeur y est typiquement de 2, mais il peut y avoir un écart stœchiométrique. A² peut par exemple être Al, Fe, Cr, Ga, Ti, La. A¹ et A² peuvent représenter le même cation. TO₄ représente un anion dans lequel les quatre atomes d'oxygène forment un tétraèdre, le cation T étant au centre du tétraèdre ; T représente principalement un cation de degré d'oxydation +IV, et principalement le silicium. Dans ce dernier cas TO₄ représente l'anion silicate (SiO₄)⁴⁻ et on parle alors pour ces grenats de nésosilicates dont la structure peut être décrite par un réseau tridimensionnel formé de tétraèdres SiO₄ connectés par sommet à des octaèdres A²O₆. Les cavités ménagées ont la forme de cubes distordus A¹O₈ (dodécaèdres). Chaque tétraèdre partage ses sommets avec quatre octaèdres différents. Chaque octaèdre est lié par sommet à six tétraèdres différents et par arête à six dodécaèdres. Chaque dodécaèdre partage des arêtes avec quatre autres dodécaèdres, quatre octaèdres et deux tétraèdres. Seules deux de ses arêtes ne sont pas partagées. T peut être également le cation Zr⁴⁺. Tout ou partie des éléments T d'un degré d'oxydation +IV peut être remplacé par des atomes d'un degré d'oxydation +III ou +V, tel que : Al, Fe, As, V, Nb, In, Ta, Zr; cela peut engendrer un ajustement de la quantité molaire d'oxygène dans la formule Li_{d} A¹ₓ A²_{y}(TO₄)_{z}. Dans cette formule les atomes A¹, A², T et O peuvent faire l'objet d'une substitution isomorphe. Cette substitution isomorphe peut être de différents types, et principalement de deux types : un nombre d'atomes identiques peut être remplacé par le même nombre d'atomes différents de même valence (isomorphismes dit de première espèce), un atome peut être remplacé par un autre atome de rayon ionique proche et d'une valence qui diffère d'une unité (isomorphisme dit de second espèce, par substitution dite aliovalente) ; dans ce deuxième cas la neutralité électrique est assurée soit par un remplacement correspondant dans le réseau cristallographique, soit par une lacune, soit encore par un ion (anion ou cation) interstitiel mobile ; cet ion interstitiel mobile peut être du lithium. Dans la formule indiquée ci-dessus le nombre z est normalement égal à 3 ou proche de 3. Une petite partie des atomes d'oxygène peut éventuellement être lié à un atome d'hydrogène (groupement OH au lieu de O). Une petite partie des groupes (TO₄) peut également être remplacé par des groupements OH ; dans ce cas il conviendrait d'écrire (TO₄)₃₋ₚ(OH)₄ₚ au lieu de (TO₄)₃. L'oxygène peut être remplacé au moins partiellement par des anions bivalents ou trivalents (tels que N³⁻).

Les conducteurs ioniques à base de type grenat avec des ions de lithium mobiles sont décrits par exemple dans les documents WO 2005/085138, WO 2009/003695 et WO 2010/090301. Les ions lithium occupent des sites cristallographiques et peuvent aussi être en position interstitielle.

Dans le cadre de la présente invention les composés de type grenat sont, de préférence, choisis parmi :
∘ le Li₇La₃Zr₂O₁₂ ;
∘ le Li₆La₂BaTa₂O₁₂ ;
∘ le Li_{5,5}La₃Nb_{1,75}ln_{0,25}O₁₂ ;
∘ le Li₅La₃M₂O₁₂ avec M = Nb ou Ta ou un mélange des deux composés ;
∘ le Li₇₋ₓBaₓLa₃₋ₓM₂O₁₂ avec 0≤x≤1 et M = Nb ou Ta ou un mélange des deux composés ;
∘ et le Li₇₋ₓLa₃Zr₂₋ₓMₓO₁₂ avec 0≤x≤2 et M = Al, Ga ou Ta ou un mélange de deux ou trois de ces composés.

### 2. Description détaillée

Pour répondre aux inconvénients précédemment cités, l'inventeur a mis au point un nouveau procédé de fabrication de batterie tout solide, ne contenant pas de solvants organiques afin qu'elles puissent être chauffées sans risque de combustion. Les objectifs sont atteints en réalisant par la réalisation d'un procédé de fabrication d'une batterie en couche mince comprenant un électrolyte solide comportant au moins matériau polymère réticulé comportant des groupements ioniques. Les batteries obtenues par le procédé selon l'invention sont de structure multicouches, en opposition aux structures planaires des batteries conventionnelles en couches minces, afin d'obtenir des batteries possédant une bonne densité d'énergie et de puissance. De plus, le procédé d'obtention de ces batteries permet de réaliser un assemblage des couches de la batterie à une température relativement basse, i.e. à une température inférieure à 300°C, et ce sans diminuer les capacités surfaciques des électrodes constitutives de la batterie résultante. La réalisation d'une batterie "tout solide" nécessite le recours à des matériaux stables dimensionnellement, afin de fiabiliser le comportement de la batterie, notamment en ce qui concerne la limitation des contraintes de déformation sur l'encapsulation, ou sur les électrodes.

Les couches d'anode et de cathode sont déposées parmi au moins l'une des techniques suivantes :
i) dépôt physique par phase vapeur (PVD), et plus particulièrement par évaporation sous vide, par ablation laser, par faisceau d'ions, par pulvérisation cathodique ;
ii) dépôt chimique par phase vapeur (CVD), et plus particulièrement assisté par plasma (PECVD), assisté par laser (LACVD), ou assisté par aérosol (AA-CVD) ;
iii) électropulvérisation ;
iv) électrophorèse ;
v) aérosol deposition ;
vi) sol-gel ;
vii) trempage, plus particulièrement par trempage-retrait (dip-coating), trempage-tournette (spin-coating), ou par le procédé Langmuir-Blodgett.

Selon l'invention, les couches d'anode et de cathode sont avantageusement déposées par électrophorèse. Le dépôt électrophorétique de particules se fait par l'application d'un champ électrique entre le substrat sur lequel est réalisé le dépôt et une contre-électrode, permettant de mettre en mouvement les particules chargées de la suspension colloïdale, et de les déposer sur le substrat. L'absence de liants et d'autres solvants déposés en surface avec les particules permet d'obtenir des dépôts très compacts. La compacité obtenue grâce au dépôt électrophorétique, limite voire d'évite les risques de craquelures ou d'apparition d'autres défauts dans le dépôt pendant les étapes de séchage. De plus la vitesse de dépôt peut être très élevée en fonction du champ électrique appliqué et de la mobilité électrophorétique des particules de la suspension.

Selon l'invention, le procédé de fabrication d'une batterie tout solide selon l'invention comprend une étape a) de dépôt d'une couche de matériaux d'anode. Les matériaux choisis pour la couche de matériau d'anode sont de préférence choisis parmi les matériaux suivants :
(i) les oxynitrures d'étain (de formule typique SnOₓN_{y});
(ii) le phosphate de fer lithié (de formule typique LiFePO₄);
(iii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures-carbures de formule typique SiₐSn_{b}C_{c}O_{y}N_{z} avec a>0, b>0, a+b≤2, 0<c-10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, I, S, Se, Te, P, As, Sb, Bi, Ge, Pb et a>0, b>0, a+b≤2, 0<y≤4 et 0<z≤3.
(iv) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(v) les oxydes SnO₂, Li₄Ti₅O₁₂, SnB_{0,6}P_{0,4}O₂,₉ et TiO₂.

Le Li₄Ti₅O₁₂ pour la réalisation d'une couche d'anode est plus particulièrement préférée. De plus, le Li₄Ti₅O₁₂ est un matériau à insertion du lithium insérant de manière réversible les ions lithium sans induire de déformation du matériau hôte.

Selon l'invention, le procédé de fabrication d'une batterie tout solide comprend une étape b) de dépôt d'une couche de matériaux de cathode. La couche de matériaux de cathode est de préférence réalisée par électrophorèse. Les matériaux choisis pour la couche de matériau de cathode sont de préférence choisis parmi les matériaux suivants :
(i) les oxydes Li Mn₂O₄, LiCoO₂, LiNiO₂, LiMn_{1,5}Ni_{0,5}O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ;
(iii) toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

Avantageusement, les dépôts de la couche de matériau d'anode et de cathode sont réalisés par un dépôt électrophorétique de nanoparticules de matériau d'anode et de cathode respectivement.

L'électrode de cathode, constituée d'un film mince de LiMn₂O₄ déposé sur un substrat métallique, de préférence en nickel est avantageusement réalisée sans avoir recours à des techniques du vide, ni salles sèches, qui sont des équipements très couteux à mettre en oeuvre. En effet, le LiMn₂O₄, comme le LiMn_{1,5}Ni_{0,5}O₄ ne sont pas sensibles spontanément à l'air, il est cependant recommandé d'éviter les expositions prolongées. L'impact des expositions des matériaux de cathode à l'air pendant la fabrication des électrodes reste négligeable aux regards des durées de mise en oeuvre relativement courtes.

Pour la réalisation de l'anode ou de la cathode, on peut ajouter aux matériaux cités précédemment des nanoparticules de matériaux conducteurs électroniques, et en particulier de graphite, et/ou de matériaux conducteurs ioniques, du type de ceux utilisés pour réaliser les films d'électrolyte (décrits ci-après).

Avantageusement, les dépôts de la couche de matériau d'anode et de cathode sont réalisés directement sur leur substrat métallique. Pour des faibles tailles de nanoparticules, i.e. inférieurs à 100 nm, le dépôt des couches d'anode, de cathode et d'électrolyte sont réalisées par électropulvérisation, électrophorèse, à partir d'un aérosol ou par trempage. Avantageusement, les couches d'anode, de cathode et d'électrolyte sont toutes déposées par électrophorèse. Ce mode de réalisation particulier du procédé selon l'invention permet d'obtenir une couche dense et compacte de nanoparticules, notamment par auto-densification (appelé « self-sintering ») de la couche de nanoparticules lors de l'étape de dépôt électrophorétique, de séchage et/ou de traitement thermique à basse température. Par ailleurs, le dépôt électrophorétique de la couche de matériau d'anode ou de cathode étant compact, le risque de fissuration de la couche après séchage est réduit, et ce, contrairement aux couches de nanoparticules réalisées à partir d'encres ou de fluides, ayant de faibles extraits secs et pour lesquels les dépôts contiennent du solvant en grande quantité, qui après séchage donne lieu à l'apparition de fissures dans le dépôt, nuisible pour le fonctionnement d'une batterie.

Selon l'invention, le dépôt de la couche de matériau d'anode ou de cathode est réalisé directement sur son substrat conducteur, de préférence un substrat conducteur métallique choisi parmi les matériaux suivants : nickel, aluminium, acier inoxydable, titane ou cuivre. Dans un mode de réalisation préféré, le dépôt de la couche de matériau d'anode ou de cathode est réalisé sur un substrat en nickel. L'épaisseur du substrat est inférieur à 10 µm, de préférence inférieure à 5 µm.

Les substrats conducteurs peuvent être réalisés sous forme de feuilles, éventuellement des feuilles comprenant les motifs des électrodes pré-découpés ou sous forme de bandes. Afin d'améliorer la qualité des contacts électriques avec les électrodes, les substrats peuvent avantageusement être revêtus d'un métal ou d'un alliage de métaux, de préférence choisi parmi l'or, le chrome, l'inox, le palladium, le molybdène, le titane, le tantale, ou l'argent.

Selon l'invention, le dépôt d'une couche de nanoparticules de matériau d'anode ou de cathode directement sur son substrat conducteur, par exemple par électrophorèse, permet d'obtenir une couche dense de structure nanocristalline. Cependant, la formation de joints de grains est possible, conduisant à formation d'une couche de structure particulière, entre celle d'un matériau amorphe et cristallisé, ce qui peut dans certains cas limiter la cinétique de diffusion des ions lithiums dans l'épaisseur de l'électrode. Ainsi, la puissance de l'électrode de la batterie et le cycle de vie peuvent être affectés. Avantageusement, afin d'améliorer les performances de la batterie, un traitement thermique de recristallisation peut être réalisé pour améliorer la cristallinité, et éventuellement la consolidation de l'électrode afin de renforcer la puissance des électrodes (anode et/ou cathode).

Le traitement thermique de recristallisation de la couche d'anode et/ou de cathode est réalisé à une température comprise entre 300°C et 1000°C, de préférence entre 400°C et 800°C, et encore plus préférentiellement entre 500°C et 700°C. Le traitement thermique doit être réalisé après l'étape a) et/ou b) de dépôt de la couche d'anode et/ou de cathode, mais avant l'étape c) de dépôt de la couche d'électrolyte.

Selon l'invention, le procédé de fabrication d'une batterie comprend une étape c) de dépôt d'une couche d'électrolyte solide comportant au moins un matériau polymère solide réticulé comportant des groupements ioniques. Le dépôt de la couche de matériau d'électrolyte est réalisé sur la couche de matériau d'anode et/ou sur la couche de matériau de cathode.

De préférence le matériau polymère réticulé est choisi parmi tout type de polymère contenant les groupements cationiques décrit ci-après. Plus particulièrement le matériau polymère réticulé est choisi parmi les polyméthacrylates de méthyle, les polyimides, les polysiloxanes ou les polyamines, contenant les groupements cationiques décrit ci-après.

De préférence, les groupements ioniques du matériau polymère sont choisis parmi les cations suivants : l'imidazolium, le pyrazolium, le tétrazolium le pyridinium, le pyrrolidinium, tel que le n-propyl-n-methylpyrrolidinium (appelé aussi PYR₁₃) ou le n-butyl-n-methylpyrrolidinium (appelé aussi PYR₁₄), l'ammonium, le phosphonium ou le sulfonium ; et/ou parmi les anions suivants : le bis(trifluoromethane)sulfonimide, le bis(fluorosulfonyl)imide, ou le n-(nonafluorobutanesulfonyle)-n-(trifluoromethanesulfonyle)-imide (de formule brute C₅F₁₂NO₄S₂, appelé aussi IM₁₄⁻). L'utilisation de groupements anioniques du matériau polymère permet de conserver de bonnes propriétés de résistance à l'exposition à l'air et à l'humidité, ce qui simplifie la mise en œuvre industrielle et améliore la durée de vie de la batterie.

De plus, la couche de matériau de polymère solide réticulé comportant des groupements ioniques permet de garantir la sécurité et la durée de vie de la batterie en la protégeant des risques de court-circuit et d'inflammation de solvant. En effet, ces matériaux polymères sont totalement solides et ne comprennent aucun électrolyte liquide, ou dissous dans un solvant. De plus, ces matériaux polymères solides réticulés résistent aux fortes températures, et ce sans risque d'évaporation ni d'inflammation d'un solvant organique.

La couche de matériau d'électrolyte c) est réalisée à partir d'un matériau d'électrolyte solide comprenant un matériau polymère solide réticulé comportant des groupements ioniques, le matériau d'électrolyte solide peut être choisi parmi :
∘ les grenats de formule

   Li_{d}A¹ₓA²_{y}(TO₄)_{z}

   où
   ▪ A¹ représente un cation de degré d'oxydation +II, de préférence Ca, Mg, Sr, Ba, Fe, Mn, Zn, Y, Gd ; et où
   ▪ A² représente un cation de degré d'oxydation +III, de préférence Al, Fe, Cr, Ga, Ti, La ; et où
   ▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
   ▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2), et y est de 2 mais peut être compris entre 1,7 et 2,3 (de préférence entre 1,9 et 2,1) ;
∘ les grenats, de préférence choisi parmi : le Li₇La₃Zr₂O₁₂; le Li₆La₂BaTa₂O₁₂; le Li_{5,5}La₃Nb_{1,75}ln_{0,25}O₁₂; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
∘ les phosphates lithiés, de préférence choisi parmi: le Li₃PO₄; le Li₃(Sc₂₋ₓMₓ)(PO₄)₃ avec M=Al ou Y et 0 ≤ x ≤ 1 ; le Li₁₊ₓMₓ(SC)₂₋ₓ(PO₄)₃ avec M = Al, Y, Ga ou un mélange des trois composés et 0 ≤ x ≤ 0,8 ; le Li₁₊ₓMₓ(Ga_{1-y}Sc_{y})₂₋ₓ(PO₄)₃ avec 0 ≤ x ≤ 0,8 ; 0 ≤ y ≤ 1 et M= Al ou Y ou un mélange des deux composés ; le Li₁₊ₓMₓ(Ga)₂₋ₓ(PO₄)₃ avec M = Al, Y ou un mélange des deux composés et 0 ≤ x ≤ 0,8 ; ;le Li₁₊ₓAlₓTi₂₋ₓ(PO₄)₃ avec 0 ≤ x ≤ 1, ou le Li₁₋ₓAlₓGe₂₋ₓ(PO₄)₃ avec 0 ≤ x ≤ 1 ; ou le Li_{1+x+z}Mₓ(Ge_{1-y}Ti_{y})₂₋ₓSi_{z}P_{3-z}O₁₂ avec 0≤x≤0,8 et 0≤y≤1,0 & 0≤z≤0,6 et M= Al, Ga ou Y ou un mélange de deux ou trois de ces composés ; le Li_{3+y}(Sc₂₋ₓMₓ)ₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
∘ les borates lithiés, de préférence choisi parmi : le Li₃(Sc₂₋ₓMₓ)(BO₃)₃ avec M=Al ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}Sc_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
∘ les oxydes lithiés, de préférence choisis parmi le Li₇La₃Zr₂O₁₂ ou le Li₅₊ₓLa₃(Zrₓ,A₂₋ₓ)O₂ avec A=Sc, Y, Al, Ga et 1,4 ≤ x ≤ 2 ou le Li_{0,35}La_{0,55}TiO₃ ;
∘ les silicates, de préférence choisis parmi Li₂Si₂O₅, Li₂SiO₃, Li₂Si₂O₆, LiAlSiO₄, Li₄SiO₄, LiAlSi₂O₆.

La couche de matériau d'électrolyte c) stable aux contacts des anodes fonctionnant à des potentiels très réducteurs est réalisée à partir de matériau d'électrolyte choisi parmi :
∘ les grenats de formule

   Li_{d}A¹ₓA²_{y}(TO₄)_{z}

   où
   ▪ A¹ représente un cation de degré d'oxydation +II, de préférence Ca, Mg, Sr, Ba, Fe, Mn, Zn, Y, Gd ; et où
   ▪ A² représente un cation de degré d'oxydation +III, de préférence Al, Fe, Cr, Ga, Ti, La ; et où
   ▪ (TO₄) représente un anion dans lequel T est un atome de degré d'oxydation +IV, situé au centre d'un tétraèdre formé par les atomes d'oxygène, et dans lequel TO₄ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
   ▪ sachant que : d est compris entre 2 et 10, préférentiellement entre 3 et 9, et encore plus préférentiellement entre 4 et 8 ; x est de 3 mais peut être compris entre 2,6 et 3,4 (de préférence entre 2,8 et 3,2), et y est de 2 mais peut être compris entre 1,7 et 2,3 (de préférence entre 1,9 et 2,1) ;
∘ les grenats, de préférence choisi parmi : le Li₇La₃Zr₂O₁₂; le Li₆La₂BaTa₂O₁₂; le Li_{5,5}La₃Nb_{1,75}ln_{0,25}O₁₂; le Li₅La₃M₂O₁₂ avec M = Nb ou Ta ou un mélange des deux composés ; le Li₇₋ₓBaₓLa₃₋ₓM₂O₁₂ avec 0≤x≤1 et M = Nb ou Ta ou un mélange des deux composés ; le Li₇₋ₓLa₃Zr₂₋ₓMₓO₁₂ avec 0≤x≤2 et M = Al, Ga ou Ta ou un mélange de deux ou trois de ces composés ;
∘ les phosphates lithiés, de préférence choisi parmi : le Li₃PO₄; le Li₃(Sc₂₋ₓMₓ)(PO₄)₃ avec M=Al ou Y et 0 ≤ x ≤ 1 ; le Li₁₊ₓMₓ(Sc)₂₋ₓ(PO₄)₃ avec M = Al, Y, Ga ou un mélange des trois composés et 0 ≤ x ≤ 0,8 ; le Li₁₊ₓMₓ(Ga_{1-y}SC_{y})₂₋ₓ(PO₄)₃ avec 0 ≤ x ≤ 0,8 ; 0 ≤ y ≤ 1 et M= Al ou Y ou un mélange des deux composés ; le Li₁₊ₓMₓ(Ga)₂₋ₓ(PO₄)₃ avec M = Al, Y ou un mélange des deux composés et 0 ≤ x ≤ 0,8 ; le Li₁₊ₓAlₓGe₂₋ₓ(PO₄)₃ avec 0 ≤ x ≤ 1 ; le Li_{3+y}(Sc₂₋ₓMₓ)Q_{y}P_{3-y}O₁₂, avec M = Al et/ou Y et Q = Si et/ou Se, 0 ≤ x ≤ 0,8 et 0 ≤ y ≤ 1 ; ou le Li_{1+x+y}MₓSc₂₋ₓQ_{y}P_{3-y}O₁₂, avec M = Al, Y, Ga ou un mélange des trois composés et Q = Si et/ou Se, 0 ≤ x ≤ 0,8 et 0 ≤ y ≤ 1 ; ou le Li_{1+x+y+z}Mₓ(Ga_{1-y}Sc_{y})₂₋ₓQ_{z}P_{3-z}O₁₂ avec 0 ≤ x ≤ 0,8 ; 0 ≤ y ≤ 1 ; 0 ≤ z ≤ 0,6 avec M = Al ou Y ou un mélange des deux composés et Q= Si et/ou Se ; ou Li₁₊ₓNₓM₂₋ₓP₃O₁₂, avec 0 ≤ x ≤ 1 et N= Cr et/ou V, M = Sc, Sn, Zr, Hf, Se ou Si, ou un mélange de ces composés ;
∘ les borates lithiés, de préférence choisi parmi : le Li₃(Sc₂₋ₓMₓ)(BO₃)₃ avec M=Al ou Y et 0 ≤ x ≤ 1 ; le Li₁₊ₓMₓ(Sc)₂₋ₓ(BO₃)₃ avec M = Al, Y, Ga ou un mélange des trois composés et 0 ≤ x ≤ 0,8 ; 0 ≤ y ≤ 1 ; le Li₁₊ₓMₓ(Ga_{1-y}SC_{y})₂₋ₓ(BO₃)₃ avec 0 ≤ x ≤ 0,8 ; 0 ≤ y ≤ 1 et M= Al ou Y ; le Li₁₊ₓMₓ(Ga)₂₋ₓ(BO₃)₃ avec M = Al, Y ou un mélange des deux composés et 0 ≤ x ≤ 0,8 ; 0 ≤ y ≤ 1 ; le Li₃BO₃, le Li₃BO₃-Li₂SO₄, le Li₃BO₃-Li₂SiO₄, le Li₃BO₃-Li₂SiO₄-Li₂SO₄ ;
∘ les oxynitrures, de préférence choisis parmi Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium de phosphore ou de bore (appelés LiPON et LIBON) pouvant également contenir du silicium, du soufre, du zirconium, de l'aluminium, ou une combinaison d'aluminium, bore, soufre et/ou silicium, et du bore pour les de lithium de phosphore ;
∘ les oxydes lithiés, de préférence choisis parmi le Li₇La₃Zr₂O₁₂ ou le Li₅₊ₓLa₃(Zrₓ,A₂₋ₓ)O₁₂ avec A=Sc, Y, Al, Ga et 1,4 ≤ x ≤ 2 ou le Li_{0,35}La_{0,55}TiO₃ ;
∘ les silicates, de préférence choisis parmi Li₂Si₂O₅, Li₂SiO₃, Li₂Si₂O₆, LiAlSiO₄, Li₄SiO₄, LiAlSi₂O₆.

Ces électrolytes peuvent être utilisés avec toutes les compositions chimiques d'anode.

Via la présence au sein de l'électrolyte d'un matériau polymère réticulé comportant des groupements ioniques, il est possible d'associer cette couche de matériau d'électrolyte c) stable aux contacts des anodes avec d'autres formulations d'électrolytes solides qui elles ne seraient qu'exclusivement au contact des cathodes. Ces électrolytes stables uniquement au contact des cathodes sont les perovskites de formules Li₃ₓLa_{2/3-x}□_{1/3-x}TiO₃, La_{2/3-x}Srₓ□_{1/3-x}LiₓTiO₃ et La_{2/3}Liₓ□_{1/3-x}Ti₁₋ₓAlₓO₃ où □ représente une lacune présente au sein de la structure. Ainsi pour le Li₃ₓLa_{2/3-x}□_{1/3-x}TiO₃, la composition comprend une lacune de Lanthane, la proportion de lanthane dans cette composition pouvant varier entre 2/3-x et 1/3-x, avec 0 < x < 0,20 et de préférence 0 < x < 0,16 ; pour le La_{2/3-x}Srₓ□_{1/3-x}LiₓTiO₃, la composition comprend une lacune de strontium, la proportion de strontium dans cette composition pouvant varier entre x et 1/3-x, avec 0 < x < 0,20 et de préférence 0 < x < 0,16 ; et pour le La_{2/3}Liₓ□_{1/3-x}Ti₁₋ₓAlₓO₃, , la composition comprend une lacune de lithium, la proportion de lithium dans cette composition peut varier entre x et 1/3-x, avec 0 < x < 0,20 et de préférence 0 < x < 0,16.

Aussi, ces électrolytes solides étant plus résistifs que les électrolytes liquides à base de solvants aprotiques contenant des sels de lithium, il est nécessaire de réaliser des films minces si l'on veut pouvoir disposer de batteries suffisamment puissantes. Ainsi, l'épaisseur de la couche d'électrolyte c) est inférieure à 10 µm, de préférence inférieure à 5 µm, et encore plus préférentiellement inférieure à 2 µm.

Dans un mode de réalisation du procédé selon l'invention, on dépose directement le matériau polymère solide réticulé comportant des groupements ioniques par trempage-retrait (dip-coating), par trempage-tournette (spin-coating), enduction au rouleau (roll coating), racle (doctor blade), électropulvérisation, ou électrophorèse. Pour cela, on dissout dans un premier temps le matériau polymère dans un solvant approprié, on dépose le matériau polymère dissous sur la ou les couche(s) d'anode, de cathode et/ou d'électrolyte puis on sèche la couche de matériau polymère afin d'éliminer le solvant.

Avantageusement, le dépôt du matériau polymère solide réticulé est réalisé par électrophorèse afin de limiter les défauts dans la couche qui pourraient engendrer des court-circuit sur la batterie finale. Par ailleurs, le dépôt électrophorétique permet de réduire le risque de fissuration de la couche après séchage, et ce, contrairement aux couches réalisées à partir d'encres ou de fluides, ayant de faibles extraits secs et pour lesquels les dépôts contiennent du solvant en grande quantité, qui après séchage donne lieu à l'apparition de fissures dans le dépôt, nuisible pour le fonctionnement d'une batterie.

Dans un autre mode de réalisation du procédé selon l'invention, on dépose un monomère et/ou un oligomère et/ou un pré-polymère comprenant un ou plusieurs groupements polymérisables sur la couche de matériau d'anode et/ou de cathode. De préférence, on dépose un pré-polymère comprenant un ou plusieurs groupements réactifs permettant le greffage des groupements ioniques. La polymérisation est réalisée par voie thermique et/ou photochimique directement sur la ou les couche(s) d'anode et/ou de cathode. Typiquement, la polymérisation est réalisée en présence d'un amorceur thermique, par exemple choisi parmi le peroxyde de benzoyle, le peroxyde d'acétyle ou encore l'azoisobutyronitrile, et/ou un amorceur photochimique, par exemple choisi parmi la benzoïne, une acétophénone, telle que la 2,2-diméthoxy-2-phénylacétophénone ou encore la 2,2-diéthoxyacétophénone.

Le dépôt d'un matériau polymère solide réticulé comportant des groupements ioniques permet d'augmenter considérablement la conductivité ionique de l'électrolyte. De plus, ces matériaux sont difficilement inflammables, résistants à haute température, et ont une pression de vapeur négligeable. La couche de matériau de polymère réticulé comportant des groupements ioniques permet alors la fabrication d'une batterie en couches minces de structure tridimensionnelle sans faire recours à un traitement thermique et/ou une compression mécanique sévère lors de l'étape d'assemblage de ladite batterie.

En effet, la réalisation d'au moins une couche de matériau polymère solide réticulé comportant des groupements ioniques permet d'effectuer l'assemblage des électrodes à basse température, i.e. une température ne dépassant pas 300°C, de préférence 200°C et encore plus préférentiellement 150°C.

Avantageusement, un liquide ionique, du PYR 13, du PYR 14 et/ou un sel de lithium peuvent être dissous dans ces polymères réticulés comportant des groupements ioniques. L'ajout d'un liquide ionique, de PYR 13, de PYR 14 et/ou un sel de lithium est bénéfique pour les performances électrochimiques, cet ajout permet d'améliorer la conduction mais permet également de réduire la rigidité du film polymérique qui sans cet ajout reste très cassant.

Selon un mode particulier de réalisation du procédé de l'invention, les électrodes (anode et cathode) sont « poinçonnées » selon un motif de découpe afin de réaliser des découpes aux dimensions de la batterie à réaliser.

Dans un mode de réalisation particulier, le poinçonnage des électrodes peut être réalisé après l'étape c) de dépôt de la couche d'électrolyte en matériau polymère solide réticulé comportant des groupements ioniques. Ces motifs comprennent trois découpes qui se jouxtent (par exemple en forme de U) et qui définissent la dimension de la batterie. Une deuxième fente peut être réalisée sur le côté non découpé afin de pouvoir assurer le passage des produits nécessaires à l'encapsulation du composant. Les électrodes anodiques et cathodiques sont ensuite empilées de manière alternée afin de constituer un empilement de plusieurs cellules élémentaires. Les motifs de découpes des anodes et cathodes sont placés en configuration « tête bêche ».

Dans un autre mode de réalisation particulier du procédé selon l'invention, les électrodes sont découpées avant l'étape c) de dépôt de la ou les couche(s) d'électrolyte en matériau polymère solide réticulé comportant des groupements ioniques, permettant le recouvrement des bords d'électrodes par un film d'électrolyte, protégeant ainsi le contact des électrodes avec l'atmosphère, et permettant d'améliorer la durée de vie calendaire de la batterie. Dans un mode de réalisation alternatif, les découpes sont réalisées sur les substrats avant les étapes a) et b) de dépôt de la couche d'anode et de cathode, permettant un recouvrement des bords d'électrodes par un film d'électrolyte en matériau polymère solide réticulé comportant des groupements ioniques. Ce mode de réalisation particulier présente l'avantage de recouvrir les bords d'électrodes avant le dépôt de la couche de matériau d'électrolyte, ce qui permet par la suite de réaliser aisément un film d'encapsulation autour des électrodes, surtout lorsque la couche d'électrolyte est composée de matériaux stables à l'humidité. Le recouvrement des bords latéraux des électrodes permet également de réduire les risques de court-circuit dans la cellule.

Enfin, une étape essentielle du procédé selon l'invention comprend un traitement thermique et/ou une compression mécanique de l'empilement obtenu précédemment pour obtenir une batterie en couches minces entièrement solide. Le traitement thermique est réalisé à une température comprise entre 50 et 300°C, de préférence 100 et 200°C, Avantageusement, la température du traitement thermique ne dépasse pas 200°C. Avantageusement, la compression mécanique des couches à assembler est réalisée à une pression comprise entre 10 et 100 MPa, de préférence entre 20 et 50 MPa.

Dans un mode de réalisation particulier, il est avantageux, après l'étape d'empilement et avant l'ajout des terminaisons, d'encapsuler l'empilement en déposant une couche mince d'encapsulation pour assurer la protection de la cellule de la batterie vis-à-vis de l'atmosphère. La couche d'encapsulation doit être stable chimiquement, résister à une température élevée et être imperméable à l'atmosphère pour jouer sa fonction de couche barrière. Préférentiellement, la couche mince d'encapsulation est constituée d'une couche polymérique, de céramique, en verre ou en vitrocéramique, pouvant être par exemple sous forme d'oxyde, de nitrure, de phosphates, d'oxynitrure, ou de siloxane. Encore plus préférentiellement, cette couche d'encapsulation est revêtue d'une résine époxy ou de silicone.

La couche d'encapsulation peut être avantageusement déposée par dépôt chimique en phase vapeur (CVD), ce qui permet d'avoir un recouvrement de l'ensemble des surfaces de l'empilement accessible. Ainsi, l'encapsulation peut ainsi réalisée directement sur les empilements, le revêtement pouvant pénétrer dans l'ensemble des cavités disponibles. Avantageusement, une seconde couche d'encapsulation peut être déposée sur la première couche d'encapsulation pour augmenter la protection des cellules batteries de leur environnement externe. Typiquement, le dépôt de cette seconde couche peut être réalisé par une imprégnation de silicone. Le choix d'un tel matériau vient du fait qu'il résiste à des températures élevées et la batterie peut ainsi être assemblée aisément par soudure sur des cartes électroniques sans apparition de transitions vitreuses.

Avantageusement, l'encapsulation de la batterie est réalisée sur quatre des six faces de l'empilement. Les couches d'encapsulation entourent la périphérie de l'empilement, le reste de la protection à l'atmosphère étant assuré par les couches obtenues par les terminaisons.
De manière préférentielle les connections cathodiques et anodiques sont décalées latéralement, ce qui permet à la couche d'encapsulation de fonctionner comme diélectrique pour éviter la présence de court-circuit sur ces extrémités. Une fois l'empilement réalisé, et après l'étape d'encapsulation de l'empilement si cette dernière est réalisée, des terminaisons (contacts électriques) sont ajoutées au niveau où les collecteurs de courant cathodiques, respectivement anodiques sont apparents (non revêtus d'électrolyte isolant). Ces zones de contact peuvent être sur les côtés opposés de l'empilement pour collecter le courant mais également ou sur des côtés adjacents.
Pour réaliser les terminaisons, l'empilement, éventuellement enrobé, est découpé suivant des plans de coupe permettant d'obtenir des composants de batterie unitaires, avec la mise à nue sur chacun des plans de coupe des connexions (+) et (-) de la batterie. Les connexions peuvent ensuite être métallisées à l'aide de techniques de dépôt plasma connu de l'homme du métier et / ou par immersion dans une résine époxy conductrice (chargée à l'argent) et / ou un bain d'étain en fusion. Les terminaisons permettent de reprendre les connections électriques alternativement positives et négatives sur chacune des extrémités. Ces terminaisons permettent de réaliser les connections électriques en parallèle entre les différents éléments de batterie. Pour cela, seule les connections (+) sortent sur une extrémité, et les (-) sont disponibles sur les autres extrémités.

Cette batterie étant entièrement solide, et utilisant un matériau à insertion du lithium comme matériau d'anode, les risques de formation de dendrites de lithium métallique durant les étapes de recharge sont nuls et la capacité d'insertion de l'anode en lithium devient limitée.
Aussi, afin de garantir de bonnes performances en cyclage de la batterie selon l'invention l'architecture de batterie pour laquelle la capacité surfacique des cathodes est supérieure ou égale à la capacité surfacique des anodes est préférée.

Les couches constitutives de la batterie étant entièrement solide, le risque de formation de dendrites de lithium n'existe plus lorsque l'anode est totalement chargée. Ainsi, une telle architecture de batterie évite la création de surcharge de cellules de batterie.

Aussi, la réalisation d'une telle batterie avec des capacités surfaciques de cathodes supérieures ou égales à celles des anodes permet d'accroitre les performances en termes de durée de vie, exprimée en nombre de cycles. En effet, les électrodes étant denses et entièrement solides, le risque de perte de contact électrique entre les particules est nul.

### Exemple

Une suspension du matériau d'anode a été obtenue par broyage/dispersion de Li₄Ti₅O₁₂ dans de l'éthanol absolu à 10g/L avec quelques ppm d'acide citrique.

Une suspension de matériau de cathode a été obtenue par broyage/dispersion de LiMn₂O₄ dans de l'éthanol absolu à 25 g/L. La suspension de cathode a ensuite été diluée dans l'acétone jusqu'à une concentration de 5 g/L.

La suspension de matériau d'électrolyte a été obtenue par broyage/dispersion de poudre de Li₃Al_{0,4}Sc_{1,6}(PO₄)₃ dans de l'éthanol absolu à 5g/L et ajout d'une formulation de polymère. La formulation de polymère ajoutée a été constituée de polyéthylène glycol monométhylacrylate avec un liquide ionique 1-butyl-3-méthylimidazolium tétrafluoroborate [BMIm][BF4] (en proportion massique d'environ 3 : 7) et un sel de lithium (lithium (lithium bis(trifluoromethansulfonyl)imide ou LiTFSI). Un photoinitiateur (environ 1% en masse), en l'occurrence 2,2'-diméthoxy-2-phénylacétophénone (Irgacure™ 651, **Ciba-Geigy)** a été ajouté à la formulation de polymère.

Pour toutes ces suspensions, les broyages ont été conduits de manière à obtenir des suspensions stables avec des tailles de particules inférieures à 100 nm.

Les électrodes négatives ont été préparées par dépôt électrophorétique des nanoparticules de Li₄Ti₅O₁₂ contenues dans la suspension préalablement préparée. Le film mince de Li₄Ti₅O₁₂ (environ 1 micron) a été déposé sur les deux faces du substrat. Ces électrodes négatives ont ensuite été traitées thermiquement à 600°C.

Les électrodes positives ont été préparées de la même manière, par dépôt électrophorétique à partir de la suspension de LiMn₂O₄. Le film mince de LiMn₂O₄ (environ 1 µm) a été déposé sur les deux faces du substrat. Les électrodes positives ont ensuite été traitées à 600°C.

Après traitement thermique, les électrodes négatives et les électrodes positives ont été recouvertes par dip-coating (trempé suivi d'un séchage) d'une couche d'électrolyte constituée de Li₃Al_{0,4}Sc_{1,6}(PO₄)₃ et de la formulation de polymère précitée.

La réticulation a été obtenue par irradiation à 366 nm pendant 10 minutes à température ambiante, sous atmosphère d'argon.

L'épaisseur de la couche d'électrolyte a été mesurée et est d'environ 500nm sur chaque électrode. Ces films d'électrolyte ont ensuite été séchés et consolidés par traitement thermique.

L'empilement des anodes et cathodes a ensuite été réalisé afin d'obtenir un empilement multicouche. L'ensemble a été maintenu sous pression pendant 15 minutes à 100°C pour réaliser l'assemblage.

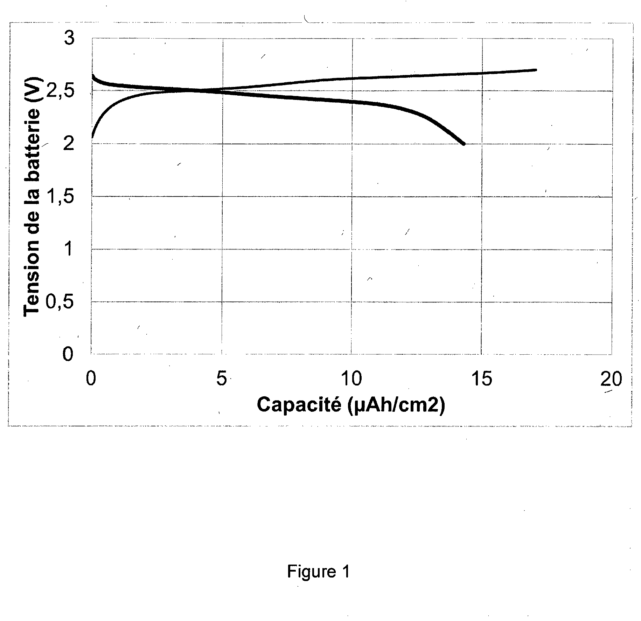

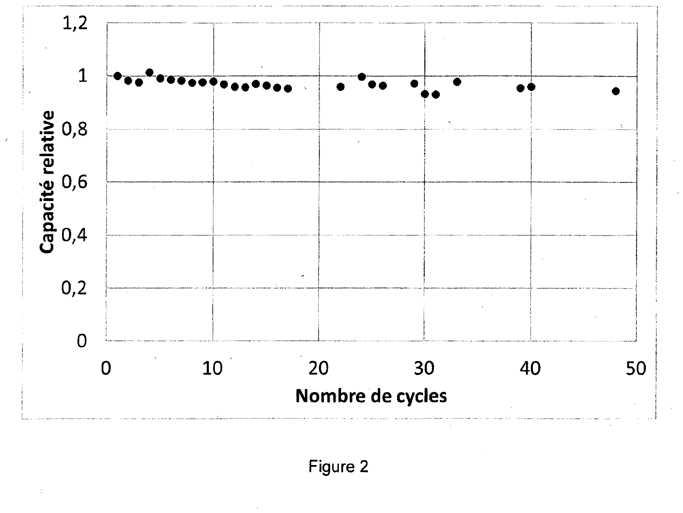

La batterie ainsi obtenue a été cyclée entre 2 V et 2,7V. La figure 1 présente les courbes de charge et décharge obtenues avec cette batterie. La figure 2 illustre l'évolution de la capacité de la batterie ainsi réalisée en cyclage.

## Revendications

1. Procédé de fabrication d'une batterie en couches minces entièrement solide comprenant les étapes successives suivantes :
a) on dépose une couche comprenant au moins un matériau d'anode (appelée ici « couche de matériau d'anode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant anodique ;
b) on dépose une couche comprenant au moins un matériau de cathode (appelée ici « couche de matériaux de cathode ») sur son substrat conducteur, de préférence sélectionné dans le groupe formé par une feuille métallique, une bande métallique, une feuille isolante métallisée, une bande isolante métallisée, un film isolant métallisé, lesdits substrats conducteurs, ou leurs éléments conducteurs, pouvant servir comme collecteur de courant cathodique, étant entendu que les étapes a) et b) peuvent être inversées ;
c) on dépose sur au moins une couche obtenue à l'étape a) et/ou b) une couche comprenant au moins un matériau d'électrolyte solide dont l'épaisseur est inférieure à 10 µm, de préférence inférieure à 5 µm, et encore plus préférentiellement inférieure à 2 µm (appelée ici « couche de matériau d'électrolyte »), le matériau d'électrolyte solide comprenant un matériau polymère solide réticulé comportant des groupements ioniques, ledit matériau polymère solide réticulé étant de préférence choisi parmi les polyméthacrylates de méthyle, les polyamines, les polyimides ou les polysiloxanes ;
d) on empile face sur face successivement :
- soit une couche de matériau d'anode revêtue d'une couche de matériau d'électrolyte solide obtenue à l'étape c) avec une couche de matériau de cathode revêtue ou non d'une couche de matériau d'électrolyte solide obtenue à l'étape c) ;
- soit une couche de matériau de cathode revêtue d'une couche de matériau d'électrolyte solide obtenue à l'étape c) avec une couche de matériau d'anode revêtue ou non d'une couche de matériau d'électrolyte solide obtenue à l'étape c) ;
e) on effectue un traitement thermique et/ou une compression mécanique de l'empilement obtenu à l'étape d) pour obtenir une batterie en couches minces entièrement solide.

2. Procédé selon la revendication 1, **caractérisé en ce que** les groupements ioniques du matériau polymère sont choisis parmi les cations suivants : l'imidazolium, le pyrazolium, le tétrazolium le pyridinium, le pyrrolidinium, tel que le n-propyl-n-methylpyrrolidinium (appelé aussi PYR₁₃) ou le n-butyl-n-methylpyrrolidinium (appelé aussi PYR₁₄), l'ammonium, le phosphonium ou le sulfonium ; et/ou parmi les anions suivants : le bis(trifluoromethane)sulfonimide, le bis(fluorosulfonyl)imide, ou le n-(nonafluorobutanesulfonyle)-n-(trifluoromethanesulfonyle)-imide.

3. Procédé selon l'une quelconque des revendications 1 ou 2, **caractérisé en ce que** le matériau polymère solide réticulé est obtenu par une étape de polymérisation d'un mélange de monomères et/ou oligomères et/ou pré-polymères comprenant un ou plusieurs groupements polymérisables par voie thermique ou photochimique, ledit mélange de monomères et/ou oligomères et/ou pré-polymères comprenant un ou plusieurs groupements réactifs permettant le greffage desdits groupements ioniques, puis séchage du matériau polymère réticulé obtenu ; ladite polymérisation par voie thermique et/ou photochimique étant de préférence réalisée directement sur la ou les couche(s) d'anodes et/ou de cathodes.

4. Procédé selon l'une quelconque des revendications 1 ou 2, **caractérisé en ce que** le matériau polymère réticulé comportant des groupements ioniques déposé à l'étape c) est réalisé parmi l'une au moins des techniques suivantes : par trempage-retrait (dip-coating), par trempage-tournette (spin-coating), enduction au rouleau (roll coating), racle (doctor blade), électropulvérisation, ou électrophorèse.

5. Procédé selon l'une quelconque des revendications 1 à 4, **caractérisé en ce que** les couches d'anode, de cathode et d'électrolytes solides sont déposées parmi au moins l'une des techniques suivantes :
(i) dépôt physique par phase vapeur (PVD), et plus particulièrement par évaporation sous vide, par ablation laser, par faisceau d'ions, par pulvérisation cathodique ;
(ii) dépôt chimique par phase vapeur (CVD), et plus particulièrement assisté par plasma (PECVD), assisté par laser (LACVD), ou assisté par aérosol (AA-CVD) ;
(iii) électropulvérisation ;
(iv) électrophorèse ;
(v) aérosol deposition ;
(vi) sol-gel ;
(vii)trempage, plus particulièrement par trempage-retrait (dip-coating), trempage-tournette (spin-coating), ou par le procédé Langmuir-Blodgett, sont déposées de préférence par électropulvérisation, électrophorèse, aérosol déposition, trempage, et encore plus préférentiellement sont toutes déposées par électrophorèse.

6. Procédé selon l'une quelconque des revendications 1 à 5, **caractérisé en ce que** les couches de matériau d'anode et/ou de cathode comprennent en outre des matériaux conducteurs électroniques, et en particulier de graphite, et/ou de matériaux conducteurs des ions lithium, du type de ceux utilisés pour réaliser les films d'électrolyte.

7. Procédé selon l'une quelconque des revendications 1 à 6, **caractérisé en ce que** les couches d'anode et/ou de cathode sont réalisées par un dépôt de nanoparticules respectivement de matériau d'anode, de cathode parmi l'une au moins des techniques suivantes : électropulvérisation, électrophorèse, aérosol déposition, trempage, et sont de préférence sont toutes déposées par électrophorèse.

8. Procédé selon l'une quelconque des revendications 1 à 7, **caractérisé en ce que** le traitement thermique est réalisé à une température comprise entre 50°C et 300°C, de préférence entre 100°C et 200°C et/ou **en ce que** la compression mécanique des couches à assembler est réalisée à une pression comprise entre 10 et 100 MPa, de préférence entre 20 et 50 MPa.

9. Procédé selon l'une quelconque des revendications 1 à 8, **caractérisé en ce que** la couche de matériau d'anode a) est réalisée à partir de matériau choisi parmi :
(i) les oxynitrures d'étain de formule typique SnOxNy ; ;
(ii) le phosphate de fer lithié de formule typique LiFePO₄ ;
(iii) les oxynitrures mixtes de silicium et étain de formule typique SiₐSn_{b}O_{y}N_{z} avec a>0, b>0, a+b≤2, 0<y≤4, o<z≤3, appelés aussi SiTON et en particulier le SiSn_{0,87}O_{1,2}N_{1,72} ; ainsi que les oxynitrures sous la forme SiₐSn_{b}C_{c}O_{y}N_{z} avec a>0, b>0, a+b≤2, 0<c<10, 0<y<24, 0<z<17; SiₐSn_{b}C_{c}O_{y}N_{z}Xₙ avec Xₙ au moins un des éléments parmi F, Cl, Br, I, S, Se, Te, P, As, Sb, Bi, Ge, Pb et a>0, b>0, a+b>0, a+b≤2, 0<c<10, 0<y<24 et 0<z<17; et SiₐSn_{b}O_{y}N_{z}Xₙ avec Xₙ au moins un des éléments parmi F, Cl, Br, I, S, Se, Te, P, As, Sb, Bi, Ge, Pb et a>0, b>0, a+b≤2, 0<y≤4 et 0<z≤3;
(iv) les nitrures de type SiₓN_{y} en particulier avec x=3 et y=4, SnₓN_{y} en particuler avec x=3 et y=4, ZnₓN_{y} en particulier avec x=3 et y=4, Li₃₋ₓMₓN avec M=Co, Ni, Cu;
(v) les oxydes SnO₂, Li₄Ti₅O₁₂, SnB_{0,6}P_{0,4}O_{2,9} et TiO₂
et/ou **en ce que** la couche de matériau de cathode b) est réalisée à partir de matériau de cathode choisi parmi :
- les oxydes LiMn₂O₄, LiCoO₂, LiNiO₂, LiMn_{1,5}Ni_{0,5}O₄, LiMn_{1,5}Ni_{0,5-x}XₓO₄ où x est sélectionné parmi Al, Fe, Cr, Co, Rh, Nd, autres terres rares, et où 0 < x< 0,1, LiFeO₂, LiMn_{1/3}Ni_{1/3}Co_{1/3}O₄;
- les phosphates LiFePO₄, LiMnPO₄, LiCoPO₄, LiNiPO₄, Li₃V₂(PO₄)₃ ; les phosphates de formule LiMM'PO₄, avec M et M', M≠M', sélectionnés parmi Fe, Mn, Ni, Co, V ;
- toutes les formes lithiées des chalcogénides suivants : V₂O₅, V₃O₈, TiS₂, les oxysulfures de titane (TiO_{y}S_{z}), les oxysulfures de tungstène (WO_{y}S_{z}), CuS, CuS₂.

10. Procédé selon l'une quelconque des revendications 1 à 9, **caractérisé en ce qu'**il comprend en outre une étape f) d'encapsulation de la batterie obtenue à l'étape e) par dépôt d'au moins une couche d'encapsulation de matériau céramique, vitreux ou vitrocéramique.

11. Procédé selon la revendication 10, **caractérisé en ce qu'**on réalise des terminaisons anodiques et cathodiques par métallisation des sections découpées, de préférence par dépôt d'une couche d'étain éventuellement déposé sur une première sous couche de nickel et/ou de résine époxy chargé en particules métalliques.

12. Procédé selon l'une quelconque des revendications 1 à 11, **caractérisé en ce que** les substrats conducteurs sont en aluminium, en cuivre, en acier inoxydable, en titane ou en nickel, de préférence en nickel, et éventuellement revêtus d'un métal noble choisi parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

13. Batterie en couches minces entièrement solide, présentant de préférence une capacité surfacique de la cathode supérieure ou égale à la capacité surfacique de l'anode, comprenant successivement :
a. un premier substrat conducteur,
b. une couche comprenant au moins un matériau d'anode (appelée ici «couche d'anode») disposée sur ce premier substrat conducteur,
c. au moins une couche comprenant au moins un matériau d'électrolyte solide disposée sur la couche comprenant au moins un matériau d'anode,
d. une couche comprenant au moins un matériau de cathode (appelée ici « couche de cathode») disposée sur la couche comprenant au moins un matériau d'électrolyte solide,
e. un second substrat conducteur disposé sur la couche comprenant au moins un matériau de cathode,
**caractérisée en ce qu'**au moins la couche comprenant au moins un matériau d'électrolyte solide a une épaisseur inférieure à 10 µm, de préférence inférieure à 5 µm, et encore plus préférentiellement inférieure à 2 µm (appelée ici « couche de matériau d'électrolyte ») et **en ce que** le matériau d'électrolyte solide comprend un matériau polymère solide réticulé comportant des groupements ioniques, ledit matériau polymère solide réticulé étant de préférence choisi parmi les polyméthacrylates de méthyle, les polyamines, les polyimides ou les polysiloxanes.

14. Batterie selon la revendication 13, **caractérisée en ce que** l'empilement des couches de cathode et d'anode est décalé latéralement.

15. Batterie selon l'une quelconque des revendications 13 ou 14, **caractérisée en ce qu'**elle comprend au moins une couche d'encapsulation, de préférence une couche en céramique, en verre ou en vitrocéramique, et de préférence une deuxième couche d'encapsulation déposée sur ladite première couche d'encapsulation, ladite deuxième couche d'encapsulation étant de préférence en silicone.

16. Batterie selon la revendication 15, **caractérisée en ce que** ladite au moins une couche d'encapsulation revêt totalement quatre des six faces de ladite batterie et partiellement les deux faces restantes, située sous les métallisations servant à la connectique de la batterie.

17. Batterie selon l'une quelconque des revendications 13 à 16, **caractérisée en ce qu'**elle comprend des terminaisons au niveau où les collecteurs de courant cathodique, respectivement anodique, sont apparents, les connexions anodiques et les connexions cathodiques se trouvant de préférence sur les côtés opposés de l'empilement.

## Patentansprüche

1. Verfahren zur Herstellung einer Feststoff-Dünnschichtbatterie, das die folgenden aufeinanderfolgenden Schritte umfasst:
a) Abscheiden einer Schicht, die mindestens ein Anodenmaterial umfasst (hier "Anodenmaterialschicht" genannt), auf deren leitfähigem Substrat, vorzugsweise ausgewählt aus der Gruppe, die von einer Metallfolie, einem Metallband, einer metallisierten Isolierfolie, einem metallisierten Isolierband, einem metallisierten Isolierfilm gebildet wird, wobei die leitfähigen Substrate, oder deren leitfähige Elemente, als Anodenstromkollektor dienen können;
b) Abscheiden einer Schicht, die mindestens ein Kathodenmaterial umfasst (hier "Kathodenmaterialschicht" genannt), auf deren leitfähigem Substrat, vorzugsweise ausgewählt aus der Gruppe, die von einer Metallfolie, einem Metallband, einer metallisierten Isolierfolie, einem metallisierten Isolierband, einem metallisierten Isolierfilm gebildet wird, wobei die leitfähigen Substrate, oder deren leitfähige Elemente, als Kathodenstromkollektor dienen können, wobei die Schritte a) und b) umgekehrt werden können;
c) Abscheiden einer Schicht, die mindestens ein Festelektrolytmaterial umfasst, deren Dicke weniger als 10 µm, vorzugsweise weniger als 5 µm, und noch stärker bevorzugt weniger als 2 µm beträgt (hier "Elektrolytmaterialschicht" genannt), auf mindestens einer Schicht, die in Schritt a) und/oder b) erhalten wurde, wobei das Festelektrolytmaterial ein vernetztes Festpolymermaterial umfasst, das ionische Gruppen umfasst, wobei das vernetzte Festpolymermaterial vorzugsweise aus Polymethylmethacrylaten, Polyaminen, Polyimiden oder Polysiloxanen ausgewählt ist;
d) aufeinanderfolgendes Stapeln, Seite auf Seite:
- entweder einer Anodenmaterialschicht, die mit einer in Schritt c) erhaltenen Festelektrolytmaterialschicht überzogen ist, mit einer Kathodenmaterialschicht, die mit einer in Schritt c) erhaltenen Festelektrolytmaterialschicht überzogen ist oder nicht;
- oder einer Kathodenmaterialschicht, die mit einer in Schritt c) erhaltenen Festelektrolytmaterialschicht überzogen ist, mit einer Anodenmaterialschicht, die mit einer in Schritt c) erhaltenen Festelektrolytmaterialschicht überzogen ist oder nicht;
e) Vornehmen einer Wärmebehandlung und/oder einer mechanischen Verdichtung des in Schritt d) erhaltenen Stapels, um eine Feststoff-Dünnschichtbatterie zu erhalten.

2. Verfahren nach Anspruch 1, **dadurch gekennzeichnet, dass** die ionischen Gruppen des Polymermaterials aus den folgenden Kationen ausgewählt sind: Imidazolium, Pyrazolium, Tetrazolium, Pyridinium, Pyrrolidinium, wie etwa n-Propyl-n-methylpyrrolidinium (auch PYR₁₃ genannt) oder n-Butyl-n-methylpyrrolidinium (auch PYR₁₄ genannt), Ammonium, Phosphonium oder Sulfonium; und/oder aus den folgenden Anionen: Bis(trifluormethan)sulfonimid, Bis(fluorsulfonyl)imid oder n-(Nonafluorbutansulfonyl)-n-(trifluormethansulfonyl)-imid.

3. Verfahren nach einem der Ansprüche 1 oder 2, **dadurch gekennzeichnet, dass** das vernetzte Festpolymermaterial über einen Schritt des Polymerisierens einer Mischung aus Monomeren und/oder Oligomeren und/oder Prepolymeren, die eine oder mehrere thermisch oder photochemisch polymerisierbare Gruppen umfassen, wobei die Mischung aus Monomeren und/oder Oligomeren und/oder Prepolymeren eine oder mehrere reaktive Gruppen umfasst, die das Aufpfropfen der ionischen Gruppen ermöglichen, und anschließenden Trocknens des erhaltenen vernetzten Polymermaterials erhalten wird; wobei die thermische und/oder photochemische Polymerisation vorzugsweise direkt auf der oder den Anoden- und/oder Kathodenschicht(en) durchgeführt wird.

4. Verfahren nach einem der Ansprüche 1 oder 2, **dadurch gekennzeichnet, dass** das ionische Gruppen umfassende vernetzte Polymermaterial, das in Schritt c) abgeschieden wird, über mindestens eine der folgenden Techniken hergestellt wird: Tauchbeschichtung (dip-coating), Schleuderbeschichtung (spin-coating), Walzenbeschichtung (roll-coating), Rakel (doctor blade), Elektrosprayen oder Elektrophorese.

5. Verfahren nach einem der Ansprüche 1 bis 4, **dadurch gekennzeichnet, dass** die Anoden-, Kathoden- und Festelektrolytschichten über mindestens eine der folgenden Techniken abgeschieden werden:
(i) physikalische Dampfphasenabscheidung (PVD), und spezieller durch Vakuumverdampfung, Laserablation, Ionenstrahl, Sputtern;
(ii) chemische Dampfphasenabscheidung (CVD), und spezieller plasmagestützt (PECVD), lasergestützt (LACVD) oder aerosolgestützt (AA-CVD);
(iii) Elektrosprayen;
(iv) Elektrophorese;
(v) Aerosolabscheidung;
(vi) Sol-Gel;
(vii) Tauchen, spezieller Tauchbeschichtung (dip-coating), Schleuderbeschichtung (spin-coating) oder Langmuir-Blodgett-Verfahren,
wobei sie vorzugsweise durch Elektrosprayen, Elektrophorese, Aerosolabscheidung, Tauchen abgeschieden werden, und noch stärker bevorzugt alle durch Elektrophorese abgeschieden werden.

6. Verfahren nach einem der Ansprüche 1 bis 5, **dadurch gekennzeichnet, dass** die Anoden- und/oder Kathodenmaterialschicht weiter elektronenleitfähige Materialien, und insbesondere Graphit, und/oder lithiumionenleitfähige Materialien vom Typ derjenigen umfassen, die für die Herstellung der Elektrolytfilme verwendet werden.

7. Verfahren nach einem der Ansprüche 1 bis 6, **dadurch gekennzeichnet, dass** die Anoden- und/oder Kathodenschicht durch ein Abscheiden von Anoden- bzw. Kathodenmaterial-Nanoteilchen über mindestens eine der folgenden Techniken hergestellt werden: Elektrosprayen, Elektrophorese, Aerosolabscheidung, Tauchen, und vorzugsweise alle durch Elektrophorese abgeschieden werden.

8. Verfahren nach einem der Ansprüche 1 bis 7, **dadurch gekennzeichnet, dass** die Wärmebehandlung bei einer Temperatur im Bereich zwischen 50 °C und 300 °C, vorzugsweise zwischen 100 °C und 200 °C durchgeführt wird, und/oder dadurch, dass die mechanische Verdichtung der zu verbindenden Schichten bei einem Druck im Bereich zwischen 10 und 100 MPa, vorzugsweise zwischen 20 und 50 MPa durchgeführt wird.

9. Verfahren nach einem der Ansprüche 1 bis 8, **dadurch gekennzeichnet, dass** die Anodenmaterialschicht a) aus einem Material hergestellt wird, ausgewählt aus:
(i) Zinn-Oxynitriden der typischen Formel SnOₓN_{y};
(ii) Lithiumeisenphosphat der typischen Formel LiFePO₄;
(iii) Silizium- und Zinn-Mischoxynitriden der typischen Formel SiₐSn_{b}O_{y}N_{z}, wobei a>0, b>0, a+b≤2, 0<y≤4, 0<z≤3, auch SiTON genannt, und insbesondere SiSn_{0,87}O_{1,2}N_{1,72}; sowie Oxynitriden in der Form SiₐSn_{b}C_{c}O_{y}N_{z}, wobei a>0, b>0, a+b≤2, 0<c<10, 0<y<24, 0<z<17; SiₐSn_{b}C_{c}O_{y}N_{z}Xₙ, wobei Xₙ mindestens eines der Elemente F, Cl, Br, I, S, Se, Te, P, As, Sb, Bi, Ge, Pb ist und a>0, b>0, a+b>0, a+b≤2, 0<c<10, 0<y<24 und 0<z<17; und SiₐSn_{b}O_{y}N_{z}Xₙ, wobei Xₙ mindestens eines der Elemente F, Cl, Br, I, S, Se, Te, P, As, Sb, Bi, Ge, Pb ist und a>0, b>0, a+b≤2, 0<y≤4 und 0<z≤3;
(iv) Nitriden vom Typ SiₓN_{y}, insbesondere wobei x=3 und y=4, SnₓN_{y}, insbesondere wobei x=3 und y=4, ZnₓN_{y}, insbesondere wobei x=3 und y=4, Li₃₋ₓMₓN, wobei M = Co, Ni, Cu;
(v) den Oxiden SnO₂, Li₄Ti₅O₁₂, SnB_{0,6}P_{0,4}O_{2,9} und TiO₂, und/oder dadurch, dass die Kathodenmaterialschicht b) aus einem Kathodenmaterial hergestellt wird, ausgewählt aus:
- den Oxiden LiMn₂O₄, LiCoO₂, LiNiO₂, LiMn₁,₅Ni₀,₅O₄, LiMn_{1,5}Ni_{0,5-x}XₓO₄, wobei x aus Al, Fe, Cr, Co, Rh, Nd, anderen seltenen Erden ausgewählt ist, und wobei 0<x<0,1, LiFeO₂, LiMn_{1/3}Ni_{1/3}CO_{1/3}O₄;
- den Phosphaten LiFePO₄, LiMnPO₄, LiCoPO₄, LiNiPO₄, Li₃V₂(PO₄)₃; den Phosphaten der Formel LiMM'PO₄, wobei M und M', M≠M', ausgewählt sind aus Fe, Mn, Ni, Co, V;
- allen Lithiumformen der folgenden Chalkogenide: V₂O₅, V₃O₈, TiS₂, Titanoxysulfiden (TiO_{y}S_{z}), Wolframoxysulfiden (WO_{y}S_{z}), CuS, CuS₂.

10. Verfahren nach einem der Ansprüche 1 bis 9, **dadurch gekennzeichnet, dass** es weiter einen Schritt f) des Verkapselns der in Schritt e) erhaltenen Batterie durch Abscheiden mindestens einer Verkapselungsschicht aus keramischem, glasartigem oder glaskeramischem Material umfasst.

11. Verfahren nach Anspruch 10, **dadurch gekennzeichnet, dass** Anoden- und Kathodenanschlüsse durch Metallisieren der zugeschnittenen Abschnitte hergestellt werden, vorzugsweise durch Abscheiden einer Zinnschicht, die gegebenenfalls auf einer ersten Unterschicht aus Nickel und/oder mit Metallteilchen gefülltem Epoxidharz abgeschieden wird.

12. Verfahren nach einem der Ansprüche 1 bis 11, **dadurch gekennzeichnet, dass** die leitfähigen Substrate aus Aluminium, Kupfer, rostfreiem Stahl, Titan oder Nickel, vorzugsweise aus Nickel, bestehen und gegebenenfalls mit einem Edelmetall überzogen sind, das aus den folgenden Metallen ausgewählt ist: Gold, Platin, Palladium, Vanadium, Kobalt, Nickel, Mangan, Niob, Tantal, Chrom, Molybdän, Titan, Palladium, Zirkonium, Wolfram oder jede Legierung, die mindestens eines dieser Metalle umfasst.

13. Feststoff-Dünnschichtbatterie, die vorzugsweise eine Oberflächenkapazität der Kathode von größer oder gleich der Oberflächenkapazität der Anode aufweist, die nacheinander umfasst:
a. ein erstes leitfähiges Substrat,
b. eine auf diesem ersten leitfähigen Substrat angeordnete Schicht, die mindestens ein Anodenmaterial umfasst (hier "Anodenschicht" genannt),
c. mindestens eine auf der mindestens ein Anodenmaterial umfassenden Schicht angeordnete Schicht, die mindestens ein Festelektrolytmaterial umfasst,
d. eine auf der mindestens ein Festelektrolytmaterial umfassenden Schicht angeordnete Schicht, die mindestens ein Kathodenmaterial umfasst (hier "Kathodenschicht" genannt),
e. ein zweites leitfähiges Substrat, das auf der mindestens ein Kathodenmaterial umfassenden Schicht angeordnet ist,
**dadurch gekennzeichnet, dass** mindestens die Schicht, die mindestens ein Festelektrolytmaterial umfasst (hier "Elektrolytmaterialschicht" genannt), eine Dicke von weniger als 10 µm, vorzugsweise weniger als 5 µm, und noch stärker bevorzugt weniger als 2 µm aufweist, und dadurch, dass das Festelektrolytmaterial ein vernetztes Festpolymermaterial umfasst, das ionische Gruppen umfasst, wobei das vernetzte Festpolymermaterial vorzugsweise aus Polymethylmethacrylaten, Polyaminen, Polyimiden oder Polysiloxanen ausgewählt ist.

14. Batterie nach Anspruch 13, **dadurch gekennzeichnet, dass** die Stapelung der Kathoden- und Anodenschicht seitlich versetzt ist.

15. Batterie nach einem der Ansprüche 13 oder 14, **dadurch gekennzeichnet, dass** sie mindestens eine Verkapselungsschicht, vorzugsweise eine Schicht aus Keramik, Glas oder Glaskeramik, und vorzugsweise eine zweite Verkapselungsschicht umfasst, die auf der ersten Verkapselungsschicht abgeschieden ist, wobei die zweite Verkapselungsschicht vorzugsweise aus Silikon besteht.

16. Batterie nach Anspruch 15, **dadurch gekennzeichnet, dass** die mindestens eine Verkapselungsschicht vier der sechs Seiten der Batterie vollständig, und die zwei restlichen Seiten, die unter den für die Verbindungstechnik der Batterie dienenden Metallisierungen liegen, teilweise überzieht.

17. Batterie nach einem der Ansprüche 13 bis 16, **dadurch gekennzeichnet, dass** sie Anschlüsse in dem Bereich umfasst, an dem der Kathoden- bzw. Anodenstromkollektor hervortreten, wobei sich die Anodenverbindungen und die Kathodenverbindungen vorzugsweise auf den gegenüberliegenden Seiten des Stapels befinden.

## Claims

1. A method for producing an all-solid thin-layer battery including the following series of steps:
a) a layer including at least one anode material (referred to here as "anode material layer") is deposited on its conductive substrate, preferably selected from the group formed by a metal sheet, a metal strip, a metallized insulating sheet, a metallized insulating strip, a metallized insulating film, said conductive substrates, or conductive elements thereof, capable of serving as an anode current collector;
b) a layer including at least one cathode material (referred to here as "cathode material layer") is deposited on its conductive substrate, preferably selected from the group formed by a metal sheet, a metal strip, a metallized insulating sheet, a metallized insulating strip, a metallized insulating film, said conductive substrates, or conductive elements thereof, capable of serving as a cathode current collector, with the understanding that steps a) and b) can be reversed;
c) on at least one layer obtained in step a) and/or b), a layer including at least one solid electrolyte material having a thickness of less than 10 µm, preferably less than 5 µm and even more preferably less than 2 µm (referred to here as "electrolyte material layer") is deposited, the solid electrolyte material including a solid cross-linked polymer material comprising ionic groups, said solid cross-linked polymer material being preferably chosen from polymethyl methacrylates, polyamines, polyimides or polysiloxanes;
d) the following are stacked face to face:
- an anode material layer coated with a solid electrolyte material layer obtained in step c) with a cathode material layer coated or not with a solid electrolyte material layer obtained in step c);
- or a cathode material layer coated with a solid electrolyte material layer obtained in step c) with an anode material layer coated or not with a solid electrolyte material layer obtained in step c);
e) a heat treatment and/or a mechanical compression of the stack obtained in step d) is performed in order to obtain an all-solid thin-layer battery.

2. The method according to claim 1, **characterized in that** the ionic groups of the polymer material are chosen from the following cations: imidazolium, pyrazolium, tetrazolium pyridinium, pyrrolidinium, such as n-propyl-n-methylpyrrolidinium (also called PYR₁₃) or n-butyl-n-methylpyrrolidinium (also called PYR₁₄), ammonium, phosphonium or sulfonium; and/or from the following anions: bis(trifluoromethane)sulfonimide, bis(fluorosulfonyl)imide, or n-(nonafluorobutane-sulfonyl)-n-(trifluoromethanesulfonyl)-imide.

3. The method according to any one of claims 1 or 2, **characterized in that** the solid cross-linked polymer material is obtained by a step of polymerization of a mixture of monomers and/or oligomers and/or pre-polymers including one or more thermally or photochemically polymerizable groups, said mixture of monomers and/or oligomers and/or pre-polymers including one or more reactive groups enabling said ionic groups to be grafted, then drying of the cross-linked polymer material obtained; said thermal and/or photochemical polymerization preferably being performed directly on the anode and/or cathode layer(s).

4. The method according to any one of claims 1 or 2, **characterized in that** the cross-linked polymer material comprising ionic groups deposited in step c) is performed using at least one of the following techniques: dip-coating, spin-coating, roll coating, doctor blade, electrospraying or electrophoresis.

5. The method according to any one of claims 1 to 4, **characterized in that** the solid anode, cathode and electrolyte layers are deposited using at least one of the following techniques:
(i) physical vapor deposition (PVD), and more specifically by vacuum evaporation, laser ablation, ion beam, or cathode sputtering;
(ii) chemical vapor deposition (CVD), and more specifically plasma-enhanced chemical vapor deposition (PECVD), laser-assisted chemical vapor deposition (LACVD), or aerosol-assisted chemical vapor deposition (AA-CVD);
(iii) electrospraying;
(iv) electrophoresis;
(v) aerosol deposition;
(vi) sol-gel;
(vii) dipping, more specifically dip-coating, spin-coating or the Langmuir-Blodgett method,
are preferably deposited by electrospraying, electrophoresis, aerosol deposition, dipping, and even more preferably are all deposited by electrophoresis.

6. The method according to any one of claims 1 to 5, **characterized in that** the layers of anode and/or cathode material also include electrically conductive materials, and in particular graphite, and/or lithium ion conductive materials, of the type of those used to produce electrolyte films.

7. The method according to any one of claims 1 to 6, **characterized in that** the anode and/or cathode layers are produced by a deposition of nanoparticles, respectively, of anode, cathode material using at least one of the following techniques: electrospraying, electrophoresis, aerosol deposition, dipping, and are preferably all deposited by electrophoresis.

8. The method according to any one of claims 1 to 7, **characterized in that** the heat treatment is performed at a temperature of between 50°C and 300°C, preferably between 100°C and 200°C, and/or **in that** the mechanical compression of the layers to be assembled is performed at a pressure of between 10 and 100 MPa, preferably between 20 and 50 MPa.

9. The method according to any one of claims 1 to 8, **characterized in that** the anode material layer a) is produced from a material chosen from:
(i) tin oxynitrides of typical formula SnOₓN_{y};
(ii) lithiated iron phosphate of typical formula LiFePO₄;
(iii) mixed silicon and tin oxynitrides of typical formula SiₐSn_{b}O_{y}N_{z} with a>0, b>0, a+b≤2, 0<y≤4, 0<z≤3, also called SiTON and in particular SiSn_{0.87}O_{1.2}N_{1.72}; as well as oxynitrides with the typical form SiₐSn_{b}C_{c}O_{y}N_{z} with a>0, b>0, a+b≤2, 0<c<10, 0<y<24, 0<z<17; SiₐSn_{b}C_{c}O_{y}N_{z}Xₙ with Xₙ at least one of the elements among F, Cl, Br, I, S, Se, Te, P, As, Sb, Bi, Ge, Pb and a>0, b>0, a+b>0, a+b≤2, 0<c<10, 0<y<24 and 0<z<17; and SiₐSn_{b}O_{y}N_{z}Xₙ with Xₙ at least one of the elements among F, Cl, Br, I, S, Se, Te, P, As, Sb, Bi, Ge, Pb and a>0, b>0, a+b≤2, 0<y≤4 and 0<z≤3;
(iv) nitrides of type SiₓN_{y} in particular with x=3 and y=4, SnₓN_{y} in particular with x=3 and y=4, ZnₓN_{y} in particular with x=3 and y=4, Li₃₋ₓMₓN with M = Co, Ni, Cu;
(v) the oxides SnO₂, Li₄Ti₅O₁₂, SnB_{0.6}P_{0.4}O_{2.9} and TiO₂. and/or **in that** the cathode material layer b) is produced from cathode material chosen from:
- the oxides LiMn₂O₄, LiCoO₂, LiNiO₂, LiMn_{1.5}Ni_{0.5}O₄, LiMn_{1.5}Ni_{0.5-x}XₓO₄ wherein X is selected from Al, Fe, Cr, Co, Rh, Nd, other rare earth elements, and wherein 0 < x < 0.1), LiFeO₂, LiMn_{1/3}Ni_{1/3}Co_{1/3}O₄;
- the phosphates LiFePO₄, LiMnPO₄, LiCoPO₄, LiNiPO₄, Li₃V₂ (PO₄)₃; the phosphates of formula LiMM'PO₄, with M and M' (M ≠ M') selected from Fe, Mn, Ni, Co, V;
- all lithiated forms of the following chalcogenides:
V₂O₅, V₃O₈, TiS₂, titanium oxysulfides (TiO_{y}S_{z}), tungsten oxysulfides (WO_{y}S_{z}), CuS, CuS₂.

10. The method according to any one of claims 1 to 9, **characterized in that** it further includes a step f) of encapsulation of the battery obtained in step e) by deposition of at least one encapsulation layer of ceramic, vitreous or vitroceramic material.

11. The method according to claim 10, **characterized in that** anode and cathode terminals are produced by metallization of the sections cut, preferably by deposition of a tin layer, optionally deposited on a first sub-layer of nickel and/or epoxy resin filled with metal particles.

12. The method according to any one of claims 1 to 11, **characterized in that** the conductive substrates are made of aluminum, copper, stainless steel, titanium or nickel, preferably nickel, and optionally coated with a noble metal chosen from the following metals: gold, platinum, palladium, vanadium, cobalt, nickel, manganese, niobium, tantalum, chromium, molybdenum, titanium, palladium, zirconium, tungsten or any alloy including at least one of these metals.

13. An all-solid thin-layer battery, preferably having a surface capacity of the cathode greater than or equal to the surface capacity of the anode, including successively:
a. a first conductive substrate,
b. a layer including at least one anode material (here called "anode layer") disposed on this first conductive substrate,
c. at least one layer including at least one solid electrolyte material disposed on the layer including at least one anode material,
d. a layer including at least one cathode material (referred to here as "cathode layer") disposed on the layer including at least one solid electrolyte material,
e. a second conductive substrate disposed on the layer including at least one cathode material,
**characterized in that** at least the layer including at least one solid electrolyte material has a thickness of less than 10 µm, preferably less than 5 µm, and even more preferably less than 2 µm (referred to here as "electrolyte material layer") and **in that** the solid electrolyte material includes a crosslinked solid polymer material comprising ionic groups, said crosslinked solid polymer material being preferably chosen from polymethyl methacrylates, polyamines, polyimides or polysiloxanes.

14. A battery according to claim 13, **characterized in that** the stack of cathode and anode layers is laterally offset.

15. A battery according to any one of claims 13 or 14, **characterized in that** it includes at least one encapsulation layer, preferably a ceramic, glass or vitroceramic layer, and preferably a second encapsulation layer deposited on said first encapsulation layer, said second encapsulation layer preferably being silicone.

16. A battery according to claim 15, **characterized in that** said at least one encapsulation layer entirely covers four of the six faces of said battery and partially covers the two remaining faces, located below the metallizations intended for the connections of the battery.

17. A battery according to any one of claims 13 to 16, **characterized in that** it includes terminals where the cathode and anode current collectors, respectively, are exposed, the anode connections and the cathode connections are preferably located on the opposite sides of the stack.
